Europäisches Patentamt

European Patent Office

Office européen des brevets

(19)

(11) Veröffentlichungsnummer: **0 389 769**

**A1**

(12) # EUROPÄISCHE PATENTANMELDUNG

(21) Anmeldenummer: 90102700.3

(51) Int. Cl.5 **H01M 2/12**

(22) Anmeldetag: 12.02.90

(30) Priorität: 25.03.89 DE 3909871

(43) Veröffentlichungstag der Anmeldung:
03.10.90 Patentblatt 90/40

(84) Benannte Vertragsstaaten:
AT BE DE FR GB IT NL

(71) Anmelder: VARTA Batterie Aktiengesellschaft
Am Leineufer 51
D-3000 Hannover 21(DE)

(72) Erfinder: **Horn, Karl Georg, Dr. Dipl.-Phys.**
**An den Römergärten 16**
**D-6233 Kelkheim(DE)**

(74) Vertreter: **Kaiser, Dieter Ralf, Dipl.-Ing.**
**Gundelhardtstrasse 72**
**D-6233 Kelkheim/Ts.(DE)**

(54) **Entgasungsstopfen für einen Bleiakkumulator.**

(57) Ein Entgasungsstopfen (1) für eine Akkumulatorenzelle enthält in seinem Gasweg ein hydrophobes, mikroporöses Formteil (5) aus Kunststoff, welches dank seiner allseitig offenen, isotropen Porenstruktur mit einem schmalen Porengrößenspektrum zwischen 10 $\mu$m und 125 $\mu$m einerseits einen hohen Gasdurchsatz gestattet, andererseits Elektrolytnebel wirksam zurückhält. Der Stopfen schützt außerdem vor einem Zünden der im Zellinnern befindlichen Ladegase von außen. Seine Gasdurchlässigkeit macht ihn für die Verwendung bei Industriebatterien besonders geeignet, die während der Ladephasen mit einer mittels Gaspumpe betriebenen Elektrolytumwälzung arbeiten.

EP 0 389 769 A1

## Entgasungsstopfen für einen Bleiakkumulator

Die Erfindung betrifft einen Entgasungsstopfen für einen Bleiakkumulator aus mikroporösem Kunststoff.

Seit langem sind zum Abdichten der Eltkrolyteinfüllöffnungen von Akkumulatorenzellen Entgasungs- oder Verschlußstopfen in Gebrauch, die mittels einer Einlage aus einem porösen Material den Austritt von Flüssigkeitsnebeln verhindern. Ursprünglich für diesen Zweck eingesetzte Fritten aus Glas- oder Metallkeramik waren mit dem Mangel behaftet, daß Flüssigkeitströpfchen, die von dem kapillaraktiven, überwiegend hydrophilen Porensystem festgehalten werden, solche Filtermaterialien auf die Dauer verstopfen. Daher haben sich heute zum überwiegenden Teil Verschlußstopfen mit porösen Abschlußplatten aus hydrophoben Kunststoffen durchgesetzt. Das GM 76 19 657 beispielsweise betrifft einen solchen, mit einem Schraubgewinde versehenen Verschlußstopfen, der eine zylindrische Scheibe aus porösem Polytetrafluorethylen als Abschluß besitzt. Gemäß US-PS 4 678 726 bildet ein sinterporöser Plastikkörper die Austrittsstelle einer zentralen Entgasungseinrichtung bei einer mehrzelligen Batterie. Die DE-PS 2 402 718 wiederum offenbart einen Belüftungsverschluß in der Form eines Steckstopfens, bei dem die von unten hereinströmenden Zellengase zwecks Abtrennung von Säurenebeln zunächst durch ein horizontal geschichtetes Kammersystem verschiedentlich umgelenkt werden und schließlich einen Zwangsweg durch eine "Diffusor"-Platte aus porösem Polypropylen nehmen.

Der vorliegenden Erfindung liegt die Aufgabe zugrunde, für eine Akkumulatorenzelle einen Verschlußstopfen aus mikroporösem Kunststoff verfügbar zu machen, der bei denkbar einfachem Aufbau über lange Betriebszeiten hinweg nur für Gase durchlässig bleibt, den Durchtritt von Elektrolytfeuchtigkeit dagegen vollständig sperrt und darüber hinaus der in seinem Innern aufgefangenen Feuchtigkeit einen leichten Rückfluß in die Zelle ermöglicht.

Die Aufgabe wird erfindungsgemäß durch einen Verschlußstopfen gelöst, wie er im Patentanspruch 1 angegeben ist.

Es hat sich gezeigt, daß ein Stopfen geeignet ist, bei dem die Ladegase vor ihrem Austritt ins Freie einen Zwangsweg durch einen mikroporösen, hydrophoben Formkörper aus Kunststoff durchlaufen, der eine dichte Schüttung von im wesentlichen sphärisch geformten und an ihren Kontaktstellen homogen vernetzten Teilchen ist, wobei die Packungslücken zwischen den Teilchen ein System untereinander verbundener und in alle Richtungen weisender Poren bilden, deren Größen sich auf ein schmales Band zwischen 10 $\mu$m und 125 $\mu$m statistisch verteilen. Die vorzugsweise Porengröße liegt bei ca. 40 $\mu$m. Ebenso wie das Gefüge der kugeligen Teilchen besitzt das mit ihm korrespondierende Porensystem eine isotrope Struktur.

Es ist für die Stopfenfunktion unerheblich, ob beispielsweise nur das obere, einem nicht porösen Kunststoffsockel aufsitzende Abschlußteil des Stopfens aus dem mikroporösen Material gemäß der Erfindung besteht, ob dieses Material sich nur auf eine in das Stopfengehäuse eingelassene Fritte beschränkt oder ob der Stopfen sogar als Ganzes, etwa in Form einer Aufsteckkappe, aus dem nämlichen Material gebildet ist.

Dem erfindungsgemäß verwendeten Kunststoffmaterial kann ein Mikrogranulat aus sphärischen Teilchen zugrundeliegen, die in eine entsprechende Form geschüttet, darin verdichtet und durch anschließendes Sintern homogen vernetzt werden. Die Sinterbehandlung sichert dem Kunststoffkörper eine hohe Formstabilität.

Gemäß einer anderen Herstellungsweise wird geschmolzener Kunststoff, den man in dünnem Strahl aus einem Schmelzgefäß auslaufen läßt, durch einen Inertgasstrom verdüst. Auch hierbei bilden die erkalteten Partikel zunächst ein kugeliges Granulat. Eine Vernetzung derselben kann ebenfalls durch Wärmebehandlung (Sintern) oder vorübergehende Befeuchtung mit einem Lösungsmittel erfolgen, unter dessen Einfluß die sphärischen Partikel an ihren Konataktstellen homogen verkleben, während die Teilchen selbst keine wesentliche Veränderung erfahren.

Schließlich kann es sich bei dem mikroporösen Körper um ein Gußteil handeln, welches entstanden ist durch Eingießen einer heißen, homogenen Lösung des betreffenden Kunststoffmaterials in einem kompatiblen Lösungsmittel in eine Form, rasches Abkühlen, bis sich die beiden Flüssigphasen trennen, sodann Erstarrenlassen der Kunststoffphase noch innerhalb der Form und weitgehende Entfernung des Lösungsmittels aus dem Feststoffgerüst.

Als besonders geeignete Materialien zumindest für den gasdurchlässigen Teil des Entgasungsstopfens gemäß der Erfindung haben sich korrosionsstabile Polymere wie Polyethylen, Polypropylen und Fluorkarbon erwiesen. Allein aufgrund ihrer allgemeinen Hydrophobizitätseigenschaft zeichnen sie sich durch eine hervorragende Filterwirkung gegenüber den vom Gasstrom mitgerissenen Feuchtigkeitspartikeln aus. Ihre Nichtbenetzbarkeit in Verbindung mit der besonderen Qualität des Porensystems in den mikroporösen Formteilen macht sie für die bei der Batterieladung entstehenden schädlichen Säurenebel vollkommen undurchlässig. Dies zeigt sich daran, daß sich die Außenseite eines Stopfens gemäß der Erfindung, selbst nachdem er längere Zeit einem mit Feuchtigkeitsnebeln belandenen Strom von Ladegasen ausgesetzt war, vollkommen trocken anfühlt.

Allerdings empfiehlt es sich in Fällen, bei denen die Druckdifferenz zwischen Batterieinnen- und Batterieaußenraum den als normal geltenden Bereich überschreitet, das poröse Kunststoffmaterial nach Maßgabe des angebotenen Porengrößenspektrums auszuwählen und einer kleineren Porengröße von etwa 25 $\mu$m den Vorzug zu geben.

Die Gasdurchlässigkeit des Stopfenmaterials ist andererseits außerordentlich hoch. Für eine gegebene Dicke und Porengröße des Kunststoffkörpers findet man einen linearen Anstieg des Gasdurchsatzes in Abhängigkeit von der Druckdifferenz zwischen Eintritts- und Austrittsseite.

Dieses günstige Verhalten gilt insbesondere auch gegenüber Luft. Es prädestiniert den erfindungsgemäßen Entgasungsstopfen damit für den Einsatz bei Großzellen von Industriebatterien, die zumindest während der Ladephasen unter Elektrolytumwälzung mit Hilfe einer Gaspumpe - gewöhnlich einer Luftpumpe - betrieben werden.

Geht man davon aus, daß eine normale Druckdifferenz zwischen Batterieinnen-und Batterieaußenraum zwischen 1 mbar und 5 mbar liegt, so sollte der Luftdurchsatz bei einem erfindungsgemäßen Stopfen, dessen poröser Teil eine Wandstärke von ca. 2 mm und eine durchschnittliche Porengröße von 60 $\mu$m aufweist, etwa 0,07 bis 0,14 1/min/cm$^2$ betragen.

Ein weiteres wichtiges Kriterium für die Auswahl des am besten geeigneten porösen Stopfenmaterials ist schließlich seine Temperaturstabilität. So kann Fluorkarbon bis 150°C, Polypropylen bis 130°C und Polyethylen bis 90°C eingesetzt werden. Dabei haben alle genannten Materialien infolge ihrer Porenstruktur die vorteilhafte Eigenschaft gemeinsam, als Zünddurchschlagsperre zu wirken; d.h. das in der Zelle bei der Überladung entstehende Knallgas kann durch den Stopfen von außen nicht gezündet werden.

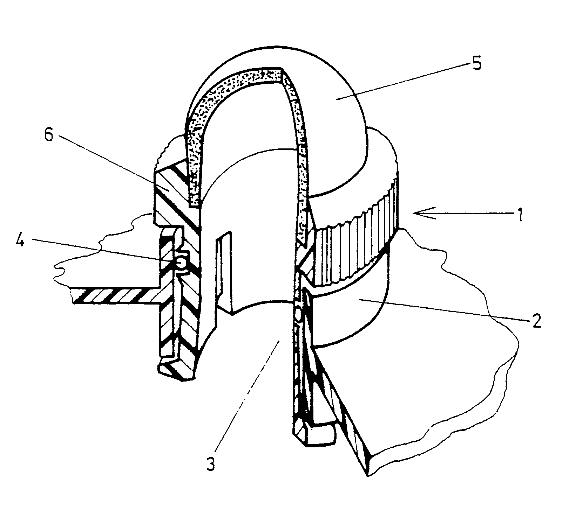

Die Figur zeigt eine mögliche Ausführungsform eines Entgasungsstopfens gemäß der Erfindung in einer Schnittdarstellung.

Der Stopfen 1 ist hier in die mit einem Kragen 2 versehene Deckelöffnung 3 einer Akkumulatorenzelle eingesteckt und dabei mittels O-Ring 4 gegen den Deckel abgedichtet. Sein mikroporöses Teil 5 besitzt die Gestalt einer halbkugelförmigen Kappe, in Aussehen und Größe etwa einem Tischtennisball vergleichbar. Dieses Teil ist mit dem Kunststoffsockel 6, der aus dem gleichen Material wie das Zellengehäuse bestehen kann, dicht verklebt oder thermisch verschweißt. Die Innenseite des Stopfens zeigt einen bündigen Übergang vom dichten Kunststoff des Sockels zum porösen Kunststoff der Kappe. Durch den hohlkugeligen Abschluß des Stopfeninnern werden die Feuchtigkeitsnebel besonders wirksam gesammelt, und die glatten Seitenwände bieten dem Flüssigkeitsniederschlag einen ungehinderten Rücklauf.

## Ansprüche

1. Entgasungsstopfen für einen Bleiakkumulator, der in seinem Gasweg einen mikroporösen, hydrophoben Kunststoffkörper enthält, dadurch gekennzeichnet, daß der Kunststoffkörper ein aus einer dichten Schüttung von im wesentlichen kugelförmigen und untereinander homogen vernetzten Partikeln gebildeter Formkörper ist, und daß die Schüttung in alle Richtungen gehende und untereinander verbundene Poren aufweist, deren Größen auf ein schmales Band zwischen 10 $\mu$m und 125 $\mu$m, vorzugsweise um ca. 40 $\mu$m, statistisch verteilt sind.

2. Entgasungsstopfen nach Anspruch 1, dadurch gekennzeichnet, daß das Leervolumen des porösen Kunststoffkörpers etwa 40 % beträgt.

3. Entgasungsstopfen nach Anspruch 1 oder 2, dadurch gekennzeichnet, daß der poröse Kunststoffkörper aus einem korrosionsstabilen, temperaturfesten Polymer, vorzugsweise aus der Reihe Polyethylen, Polypropylen und Fluorkarbon, gebildet ist.

4. Entgasungsstopfen nach einem der Ansprüche 1 bis 3, dadurch gekennzeichnet, daß der poröse Kunststoffkörper als Kappe (5) mit halbkugeliger Oberfläche gestaltet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 147 841 (J.R. SCHROFF) * Figur 4; Patentanspruch 1; Spalte 3, Zeile 59 - Spalte 4, Zeile 4 * | 1,3 | H 01 M 2/12 |
| Y | | 2,4 | |
| | --- | | |
| X | US-A-4 778 735 (M.J. SHESTOK et al.) * Figur 10; Spalte 5, Zeile 57 - Spalte 6, Zeile 7 * | 1,3 | |
| Y | | 2 | |
| | --- | | |
| Y | EP-A-0 034 860 (ELECTRONA S.A.) * Figur 1; Seite 3, Zeilen 20-24 * | 4 | |
| | --- | | |
| Y | FR-A-2 265 181 (ILLINOIS TOOL WORKS) * Figur 1; Seite 2, Zeilen 23-35 * | 4 | |
| | --- | | |
| X | US-A-3 915 752 (G.E. GROSS) * Figur 1; Patentansprüche 1,2,3,4; Spalte 2, Zeilen 24-41 * | 1,3 | |
| | --- | | |
| X | FR-A-2 131 545 (THE POST OFFICE) * Figur 2; Seite 4, Zeilen 19-22 * | 1,3 | **RECHERCHIERTE SACHGEBIETE (Int. Cl.5)** |
| | --- | | |
| X | US-A-4 002 495 (D.D. HAKARINE) * Figur 3; Spalte 3, Zeilen 23-47 * | 1,3 | H 01 M |
| | --- | | |
| X | DE-A-1 965 519 (UNION/CARBIDE) * Figur 1; Seite 4, Zeile 22 - Seite 5, Zeile 16 * | 1,2,3 | |
| | --- | | |
| A | DE-A-2 751 754 (DAIMLER-BENZ AG) * Figur 2; Seite 4, Absatz 2 * | 3 | |
| | --- | | |
| X,A | GB-A-2 054 945 (CHLORIDE GROUP) * Seite 1, Zeilen 106-111; Figur 1 * | 1,2 | |
| | --- -/- | | |

Der vorliegende Recherchenbericht wurde für alle Patentansprüche erstellt

| Recherchenort | Abschlußdatum der Recherche | Prüfer |
|---|---|---|
| DEN HAAG | 03-07-1990 | D'HONDT J.W. |

Europäisches
Patentamt

Nummer der Anmeldung

EP 90 10 2700

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 374 748 (COMPAGNIE EUROPEENNE D'ACCUMULATEURS) <br> * Figur 1; Patentanspruch 1 * <br> ----- | 4 | |

**RECHERCHIERTE SACHGEBIETE (Int. Cl.5)**

Der vorliegende Recherchenbericht wurde für alle Patentansprüche erstellt

| Recherchenort | Abschlußdatum der Recherche | Prüfer |
|---|---|---|
| DEN HAAG | 03-07-1990 | D'HONDT J.W. |

EPO FORM 1503 03.82 (P0403)